# EUROPEAN PATENT SPECIFICATION

(11) **EP 2 204 270 B1**
(45) Date of publication and mention of the grant of the patent: **17.09.2014**
(21) Application number: 08833681.3
(22) Date of filing: 24.09.2008
(51) Int. Cl.: B29B 9/06, C08L 29/04, C08K 5/053

(54) **METHOD FOR PREPARATION OF POLYETHENOL PELLETS OF HIGH FLUIDITY**
VERFAHREN ZUR HERSTELLUNG VON HOCHFLUIDEN POLYETHENOL-PELLETS
PROCÉDÉ DE FABRICATION DE GRANULÉS DE POLYETHENOL DE HAUTE FLUIDITÉ

(30) Priority: 28.09.2007 ES 200702545
(43) Date of publication of application: 07.07.2010
(73) Proprietor: Plásticos Hidrosolubles, S.l., 46138 - Rafelbuñol - Valencia (ES)
(72) Inventor: MORENO LÓPEZ, Elena, 46138 - Rafelbuñol - Valencia (ES)
(74) Representative: Carlos Hernando, Borja
(86) International application number: PCT/ES2008/000603
(87) International publication number: WO 2009/040455

(56) References cited:
- EP-A1- 0 860 471
- ES-A1- 461 687
- ES-T3- 2 217 802
- FR-A1- 2 724 388
- FR-A1- 2 831 478
- US-A- 3 997 489
- US-A- 5 137 969
- US-A- 5 462 981
- US-A1- 2005 090 576

## Description

### Technical Field

The present invention relates to a method for preparation of polyethenol pellets of high fluidity, suitable for making water-soluble parts by moulding and blowing, and the pellets obtained.

### Background of the Invention

One of the properties traditionally attributed to plastics is their hydrophobic behaviour, i.e., their impermeability and insolubility in water. However, there are plastics that can dissolve in water, such as polyethenol.

This material has the property of dissolving in water in certain conditions, which makes it very useful in some applications.

Polyethenol is a synthetic polymer that is obtained from another synthetic polymer, polyvinyl acetate or polyethanoate.

The acetate groups of the polyethanoate chain hydrolyze under standard conditions in methanol, hydroxyl groups remaining in the chain and methyl acetate being detached. Polyethenol is thus obtained.

This chemical reaction can be controlled in a rather precise manner to hydrolyze a desired percentage of acetate groups (degree of hydrolysis).

The new polymer has a structure that is very similar to that of polyethylene. The presence of the -OH groups has very significant effects. The most important effect is that the polymer is hydrophilic, the water solubility of which is a function of the proportion of -OH groups present in the chain and of the dissolution temperature. Therefore, when between 80% and 89% of the acetate groups have been substituted with -OH groups, the resulting polymer is soluble in cold water; however, when almost 100% of the acetate groups have been substituted, the polymer is soluble only at temperatures exceeding 85°C.

All the dissolved amounts of polyethenol are biodegradable and its derivatives are non-toxic.

The known pellets of this polymer have a melt flow rate of between 2 and 7 gr/10 min in their plastic phase, so they are only valid for forming techniques by extrusion and extrusion-blowing, being able to make with these pellets thin films and/or tubular bands.

Examples of these applications are those described in patent US-3,186,869, COATED FILM FOR LAUNDRY PACKAGE and patent US-3,322,674 LAUNDRY PACKAGE, which describe water-soluble films and items for washing clothes. The water-soluble films of these references are internally coated with a wax, or other material, in order to prevent the content of the container from interacting with the material in the form of film and degrading the solubility characteristics thereof.

Other interesting applications of polyethenol are the production of surgical thread, which is used for suturing in surgery. Different types of threads are used with different degrees of solubility, depending on how fast the thread is to dissolve. An example of this application is described in patent E88113740.

Prior art document EP0860471A1 refers to a method for preparation of polyethenol pellets, according to the preamble of claim 1, that defers from the present application in that the mixture of the polyethenol resin with a plasticizer and a filler it is not subjected to a thermal process to allow the pellets obtained to be used with injection techniques. Another prior art document is US2005/090576A1 describes polyethenol pellets formed by a polyethenol resin, at least one platicizer and at least one filler that has a fluidity of between 10 and 30 gr/10 min.

However, all these pellets generally have a serious drawback: it is virtually impossible to use them with injection techniques due to their low melt flow rate.

### Description of the Invention

The present invention generally relates to a method for preparation of polyethenol pellets with a melt flow rate of between 10 and 30 gr/10 min in their plastic state. This degree of fluidity allows subsequently using these pellets in injection-moulding and/or injection-blowing processes, which are impossible to carry out with the fluidity values of conventional polyethenol pellets for obtaining different water-soluble products.

To obtain the pellets, a compound or mixture is produced in a turbomixer from a polyethenol resin, preferably in powder form, regardless of its degree of hydrolysis, at least one plasticizer, such as for example propanetriol, and at least one filler or additive, for example of calcium stearate, silica or irganox, in which the mixture is subjected to a thermal process in which, initially, a controlled thermal shock between the polyethenol resin and the turbomixer occurs; specifically, after the polyethenol resin is poured into the turbomixer, it is preheated until reaching a temperature of between 10°C and 75°C, for which purpose the starting temperature of the turbomixer must be between 10°C and 75°C.

After this initial controlled thermal shock, the process continues by adding the remaining components of the mixture, either at the same time or in phases, and the temperature of the reactor being increased until reaching a value of between 100 and 168°C during a time period of not less than 10 minutes.

The compound or mixture thus obtained is introduced in a twin screw extruder provided with means for the forced discharge of gases, with a gas discharge capacity between 10% and 50% greater than the conventional capacity in a non-water-soluble polymer, given that polyethenol in its plastic phase generates a volume of vapour exceeding that of a conventional non-water-soluble polymer by between 3 and 8%.

Another aspect to be taken into account at this point is that the geometry of the screws must have aggressive shearing points and crushing areas to achieve a homogenous mixing of the compound or mixture during the extrusion thereof, with different distances and depths between the blades along the screw. This specific geometry with which the screw is designed is closely related to the dwell time of the molten pellets in the machine. This dwell time is a critical parameter because the pellets do not melt completely or they degrade if this time is less than or greater than the specific time for each material, respectively.

Once the compound is melted, the extruded material is hot-sheared to produce the pellets which must have a percentage of volatile components less than 10% after their cooling period.

### Description of the Drawings

For the purpose of illustrating that which has been described up to this point, a set of drawings is attached to the present specification forming an integral part thereof, in which a merely illustrative and non-limiting practical embodiment of the invention has been depicted in a simplified schematic manner.

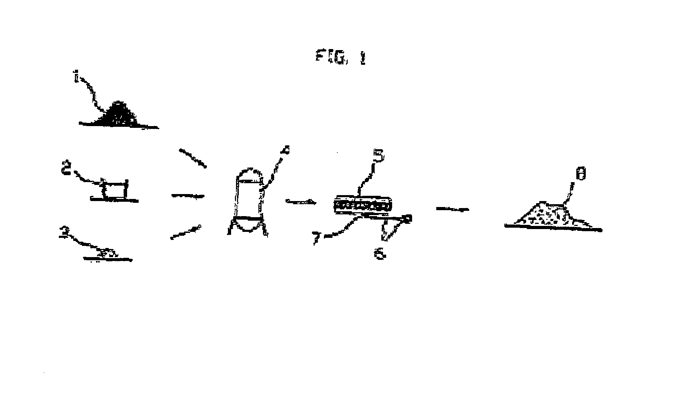

Figure 1 shows, schematically and in summary, the method for preparation of pellets.

### Description of an Embodiment

The figure attached to the present specification describes, by way of example, a practical embodiment of the method object thereof.

The present invention consists of the method of preparation of polyethenol-based pellets suitable for making water-soluble parts by moulding and blowing; in a first step, a mixture is produced specifically in a turbomixer (4) using 80% polyethenol resin (1), preferably in powder form, 15% plasticizer, for example propanetriol (2) and 5% filler or additive, for example irganox (3), this mixture being subjected to a thermal process in which first a controlled thermal shock between the polyethenol resin (1) in powder form and the turbomixer (4) occurs, the resin at ambient temperature being poured into the turbomixer (4), the vessel of which is at a starting temperature of 35°C, and maintaining such resin therein until it reaches 35°C.

Once the polyethenol powder has reached 35°C, the process continues, incorporating the remaining components (15% propanetriol and 5% irganox) in the vessel of the turbomixer, the temperature of the turbomixer (4) then being raised until reaching a value of 160°C for a time period of 12 minutes. The other components can be incorporated in the turbomixer in phases or at the same time.

The mixture thus obtained is introduced in a twin screw extruder (5) provided with means (6) for the forced discharge of gases in which a single gas outlet conduit (7) has been provided. The geometry of the screws has aggressive shearing points and crushing areas such that after reaching a degree of fluidity of 11 gr/10 min in the molten phase of the polymer, the extruded material is hot-sheared to produce the pellets (8) which have an amount of volatile components of 0.68% after their cooling period.

## Claims

1. A method for preparation of polyethenol pellets suitable for making parts by moulding and blowing, of the type wherein the first step is to mix polyethenol resin (1), at least one plasticizer (2) and at least one filler or additive (3) in a reactor, and in a second step said mixture is extruded in an extruder (5), **characterized in that** the mixture is produced specifically in a turbomixer (4) using polyethenol resin (1), the at least one plasticizer and at least one filler, this mixture being subjected to a thermal process in which, initially, a controlled thermal shock between the polyethenol resin (1) and the turbomixer (4) occurs, in which after the polyethenol resin is poured into the turbomixer, it is preheated until reaching a temperature of between 10°C and 75°C, for which purpose the starting temperature of the turbomixer must be between 10°C and 75°C, and after this initial thermal shock, the process continues by adding the remaining components of the mixture, the temperature of the reactor being raised until reaching a value of between 100 and 168°C during a time period of not less than 10 minutes, to subsequently introduce the mixture thus obtained in a twin screw extruder (5) provided with means (6) for the forced discharge of gases, the geometry of the screws of which has aggressive shearing points and crushing areas to achieve a degree of fluidity of between 10 and 30 gr/10 min in the molten phase of the polymer, at that moment being extruded and immediately hot-sheared to produce the pellets (8) which are subsequently cooled.

2. The method for preparation of polyethenol pellets according to the previous claim, **characterized in that** the gas discharge capacity of the gas outlet conduits (7) provided in the twin screw extruder (5) is between 10% and 50% greater than that established for a non-water-soluble polymer with the same degree of fluidity.

## Patentansprüche

1. Ein Verfahren zur Herstellung von Polyethenol-Pellets, geeignet für die Fertigung von Teilen mittels Formen und Blasen, des Typs in dem der erste Schritt das Vermischen von Polyethenolharz (1), wenigstens einem Weichmacher (2) und wenigstens einem Füll- oder Zusatzstoff (3) in einem Reaktor ist, und in einem zweiten Schritt besagte Mischung in einem Extruder (5) extrudiert wird, **dadurch gekennzeichnet, dass** die Mischung spezifisch in einem Turbomischer (4) unter Verwendung von Polyethenolharz (1), des wenigstens eines Weichmachers und wenigstens eines Füllstoffes hergestellt wird, wobei diese Mischung einem Wärmeprozess unterworfen wird, in dem zunächst ein kontrollierter plötzlicher Temperaturwechsel zwischen dem Polyethenolharz (1) und dem Turbomischer (4) erfolgt, in dem nach dem Gießen des Polyethenolharzes in den Turbomischer dieses bis zum Erreichen einer Temperatur zwischen 10°C und 75°C vorgeheizt wird, zu welchem Zweck die Anfangstemperatur des Turbomischers zwischen 10°C und 75 °C liegen muss, und nach diesem anfänglichen plötzlichen Temperaturwechsel der Prozess durch Zugabe der restlichen Bestandteile der Mischung weitergeht, wobei die Temperatur des Reaktors bis zum Erreichen eines Wertes zwischen 100 und 168°C angehoben wird, für eine Zeitspanne nicht kürzer als 10 Minuten, um danach die so erhaltene Mischung in einen mit Mitteln (6) zum Zwangsaustrag von Gasen vorgesehenen Doppelschneckenextruder (5) einzubringen, dessen Schneckengeometrie aggressive Scherstellen und Zerkleinerungsflächen hat, um ein Fließfähigkeitsgrad zwischen 10 und 30 g/10 min in der Schmelzphase des Polymers zu erhalten, welches in diesem Zeitpunkt extrudiert und sofort unter Wärme verschert wird, um die Pellets (8), welche nachträglich abgekühlt werden, herzustellen.

2. Das Verfahren zur Herstellung von Polyethenol-Pellets nach dem vorangehendem Anspruch, **dadurch gekennzeichnet, dass** die Gasaustragsfähigkeit der in dem Doppelschneckenextruder (5) vorgesehenen Gasabgangsleitungen (7) zwischen 10 % und 50 % grösser als die für ein nicht wasserlösliches Polymer mit dem gleichen Fließfähigkeitsgrad Festgelegte ist.

## Revendications

1. Procédé de fabrication de granulés de polyethenol aptes à faire des pièces par moulage et par soufflage, du type dans lequel la première étape est de mélanger de la résine de polyethenol (1), au moins un plastifiant (2) et au moins une charge ou additif (3) dans un réacteur, et dans une deuxième étape ledit mélange est extrudé dans une extrudeuse (5), **caractérisé en ce que** le mélange est spécifiquement produit dans un turbomélangeur (4) en utilisant de la résine de polyethenol (1), au moins un plastifiant et au moins une charge, ce mélange étant soumis à un traitement thermique dans lequel, au début, un choc thermique contrôlé est produit entre la résine de polyethenol (1) et le turbomélangeur (4), dans lequel après que la résine de polyethenol est versée dans le turbomélangeur, elle est préchauffée jusqu'atteindre une température comprise entre 10 °C et 75 °C, raison pour laquelle la température initiale du turbomélangeur doit être comprise entre 10 °C et 75 °C, et après ce choc thermique initiale, le traitement continue en ajoutant les composants restants du mélange, la température du réacteur étant augmentée jusqu'atteindre une valeur comprise entre 100 et 168 °C pendant une période de temps minimale de 10 minutes, pour introduire sensiblement le mélange ainsi obtenu à une extrudeuse à vis jumelle (5) fournie avec des moyens (6) pour la décharge forcée de gaz, dont la géométrie des vis a des points agressifs de cisaillement et des sections de broyage pour atteindre un degré de fluidité compris entre 10 et 30 gr/10 min dans la phase fondue du polymère, à ce moment-là étant extrudé et immédiatement cisaillé à chaud pour produire les granulés (8) qui sont sensiblement refroidis.

2. Le procédé de fabrication de granulés de polyethenol selon la revendication précédente, **caractérisé en ce que** la capacité de décharge de gaz des conduits de sortie de gaz (7) fournis dans l'extrudeuse à vis jumelle (5) est entre 10 % et 50 % plus importante que celle établie pour un polymère non soluble dans l'eau avec le même degré de fluidité.
